# EUROPÄISCHE PATENTSCHRIFT

(11) **EP 2 414 197 B1**
(45) Veröffentlichungstag und Bekanntmachung des Hinweises auf die Patenterteilung: **11.05.2016**
(21) Anmeldenummer: 10711385.4
(22) Anmeldetag: 26.03.2010
(51) Int. Cl.: B60R 11/04

(54) **VORRICHTUNG MIT EINER KAMERAEINHEIT ZUR BILDERFASSUNG DES AUßENBEREICHES EINES KRAFTFAHRZEUGS**
DEVICE WITH A CAMERA UNIT FOR IMAGING THE EXTERIOR OF A VEHICLE
DISPOSITIF AVEC UNE CAMERA POUR PRENDRE D'IMAGES SUR L'EXTÉRIEUR D'UN VÉHICULE

(30) Priorität: 02.04.2009 DE 102009015610
(43) Veröffentlichungstag der Anmeldung: 08.02.2012
(73) Patentinhaber: Huf Hülsbeck & Fürst GmbH & Co. KG, 42551 Velbert (DE)
(72) Erfinder: SCHÜTZ, Heiko, 42549 Velbert (DE)
(74) Vertreter: Vogel, Andreas
(86) Internationale Anmeldenummer: PCT/EP2010/054010
(87) Internationale Veröffentlichungsnummer: WO 2010/112424

(56) Entgegenhaltungen:
- EP-A1- 1 529 688
- DE-A1-102006 039 192
- FR-A1- 2 858 280

## Beschreibung

Die vorliegende Erfindung betrifft eine Vorrichtung mit einer Kameraeinheit, die zur Bilderfassung des Außenbereiches eines Kraftfahrzeugs dient, mit einer Kamera, die in einem Gehäuse der Kameraeinheit zwischen einer Rückzugsstellung und einer Bilderfassungsstellung beweglich aufgenommen ist, gemäß dem Oberbegriff des Anspruches 1.

Aus dem Stand der Technik sind verschiedene Vorrichtungen mit einer Kameraeinheit bekannt, wobei die Kameraeinheit häufig gemeinsam mit einer Schließeinheit ausgeführt ist, die ebenfalls Bestandteil der Vorrichtung ist, die in der Heckklappe eines Kraftfahrzeugs integriert werden kann. Derartige Kameraeinheiten umfassen eine Kamera, die in einem Gehäuse zwischen der Rückzugsstellung und Bilderfassungsstellung beweglich aufgenommen ist.

Beispielsweise können derartige Kameraeinheiten zum assistierten Einparken von Kraftfahrzeugen zum Einsatz kommen. Wird beispielsweise der Rückwärtsgang des Kraftfahrzeugs eingelegt, fährt die Kamera von der Rückzugsstellung in die Bilderfassungsstellung, wobei die Kamera wenigstens teilweise aus einer Öffnung im Gehäuse der Kameraeinheit herausgefahren wird. Dadurch wird der Bereich hinter dem Kraftfahrzeug durch die Kamera bildlich erfasst und auf einem Display für den Fahrer des Kraftfahrzeugs angezeigt. Ist die Rückwärtsfahrt beendet und nimmt der Fahrer des Kraftfahrzeugs den Rückwärtsgang wieder heraus, kann die Kamera von der Bilderfassungsstellung wieder zurück in die Rückzugsstellung bewegt werden.

Gemäß der vorliegenden Ausführung der Kameraeinheit ist ein Deckelelement vorgesehen, um die Kamera zumindest in der Rückzugsstellung vor Verunreinigungen zu schützen. Durch das Deckelelement kann die Öffnung im Gehäuse der Kameraeinheit in der Rückzugsstellung verschlossen werden. Folglich muss beim Übergang von der Rückzugsstellung in die Bilderfassungsstellung der Kamera das Deckelelement zwischen einer Schließstellung und einer Öffnungsstellung bewegt werden, wenn die Kamera von der Rückzugsstellung in die Bilderfassungsstellung überführt wird.

In der DE 60 2004 003 255 T2 ist eine Kameraeinheit offenbart, die als Einparkhilfe für den Fahrer eines Kraftfahrzeugs dient. Die Kameraeinheit weist ein Deckelelement auf, welches von einer Schließstellung in eine Öffnungsstellung und umgekehrt bewegbar ist. Die Ansteuerung des Deckelelementes sowie die Ansteuerung der Kamera weist jedoch einen komplexen Aufbau mit einer Vielzahl von einzelnen Elementen auf.

Aus der DE 10 2007 052 402 ist eine weitere Vorrichtung mit einer Kameraeinheit offenbart, die zur Bilderfassung des Außenbereiches eines Kraftfahrzeugs dient. Die Bewegung des hierin gezeigten Deckelelementes relativ zur Kamera umfasst mehrere Bewegungsschritte, so dass eine komplexe kinematische Ansteuerung des Deckelelementes erforderlich ist. Insbesondere muss eine Linearbewegung der Kamera mit einer Hub-Schwenkbewegung des Deckelelementes kombiniert werden. Das Bewirken derartiger Bewegungen erfordert nachteilhafterweise einen erheblichen konstruktiven Aufwand und die Bewegungsführung der Kamera und des Deckelelementes muss immer vor dem Hintergrund eines zu minimierenden Bewegungsraumes erfolgen.

Aus der JP 02 031 957 A ist eine Kameraeinheit mit einer Kamera bekannt, wobei die Bewegung der Kamera zwischen der Rückzugsstellung und der Bilderfassungsstellung über eine Spindel erzeugt wird, die mit einer Antriebseinheit wie beispielsweise einem Drehmotor in eine Drehbewegung versetzt werden kann. Die Kamera ist an einer Spindelmutter befestigt, die entlang der Erstreckungsrichtung der Spindel verläuft, wenn diese rotiert. Derartige Spindel-Mutter-Systeme sind jedoch zur Erzeugung der Bewegung der Kamera und ggf. eines Deckelelementes an der Kamera sehr langsam, da die Geschwindigkeit der Mutter auf der Spindel durch die Steigung des Spindelgewindes bestimmt ist. Ferner verursacht ein Spindel-Mutter-System höhere Laufgeräusche, die als nachteilhaft empfunden werden.

Die Dokumente DE10 2006 039 192, EP1 529 688 und FR2 858 280 offenbaren auch Vorrichtungen mit einer Kameraeinheit.

Es ist daher die Aufgabe der vorliegenden Erfindung, eine Vorrichtung mit einer Kameraeinheit zur Bilderfassung des Außenbereiches eines Kraftfahrzeugs zu schaffen, die die Nachteile des voranstehend genannten Standes der Technik überwindet und über einen einfachen und robusten sowie zuverlässigen Aufbau verfügt. Ebenfalls soll eine einfache Erzeugung der Bewegung der Kamera ermöglicht werden.

Diese Aufgabe wird ausgehend von einer Vorrichtung mit einer Kameraeinheit zur Bilderfassung des Außenbereiches eines Kraftfahrzeugs gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass wenigstens eine erste Führungskulisse zur Führung der Bewegung der Kamera zwischen der Rückzugsstellung und der Bilderfassungsstellung vorgesehen ist, und wobei an der Kamera direkt oder indirekt wenigstens ein Gleitelement angeordnet ist, das in der Führungskulisse zur Führung der Bewegung der Kamera zwischen der Rückzugsstellung und der Bilderfassungsstellung geführt ist.

Die Erfindung geht von dem Gedanken aus, wenigstens eine Führungskulisse zu verwenden, durch die die Bewegung der Kamera zwischen der Rückzugsstellung und der Bilderfassungsstellung geführt werden kann. Unter einer Führungskulisse wird vorliegend eine geometrisch speziell ausgeführte Führungsbahn in einem Körper verstanden, so dass in der Führungsbahn ein Gleitelement abgleiten kann. Die Führungskulisse kann mit einer Geometrie ausgestaltet werden, durch die die Bewegung der Kamera zwischen der Rückzugsstellung und der Bilderfassungsstellung definiert geführt wird. Folglich kann die geometrische Ausgestaltung der Führungsbahn der Führungskulisse derart optimiert werden, dass die Kamera ohne Verwendung weiterer mechanischer Bauteile beispielsweise von einer Schwenkbewegung in eine Linearbewegung übergehen kann. Im Ergebnis kann die Kamera zwischen der Rückzugsstellung und der Bilderfassungsstellung einen minimalen Bewegungsraum erfordern, da die geometrische Ausgestaltung der Führungskulisse entsprechend vorgenommen werden kann. Selbstverständlich kann die Führungskulisse auch an der Kamera vorhanden sein, so dass das Gleitelement ortsfest, beispielsweise am Gehäuse der Kameraeinheit, angeordnet ist, und folglich der gleiche Führungseffekt der Kamera im Gehäuse erzielbar ist.

Erfindungsgemäss ist ein Deckelelement vorgesehen , das zumindest dann zum Verschließen einer im Gehäuse vorhandenen Öffnung dient, wenn sich die Kamera in der Rückzugsstellung befindet. Das Gehäuse weist die Öffnung auf, damit die Kamera in der Bilderfassungsstellung wenigstens teilweise aus dem Gehäuse herausgeführt werden kann. Befindet sich die Kamera in der Rückzugsstellung, so dient das Deckelelement zum Verschließen der Öffnung, um das Eindringen von Verunreinigungen zu vermeiden, so dass insbesondere die Optik der Kamera vor den Verunreinigungen geschützt wird. Erfindungsgemäss ist das Deckelelement an der Kamera angeordnet und mit der Bewegung der Kamera zwischen der Schließstellung und der Öffnungsstellung mitbewegbar. Daraus ergibt sich eine besonders vorteilhafte Anordnung, da sowohl die Kamera als auch das Deckelelement durch dieselbe Führungskulisse geführt wird, da das Deckelelement mit der Bewegung der Kamera mitbewegt wird. Insgesamt bildet das Deckelelement und die Kamera eine starre Verbindung, wobei die starre Verbindung durch ein Führungselement gebildet ist, das auch als Halteelement des Deckelelementes bezeichnet werden kann.

Erfindungsgemäss ist das Deckelelement an der Kamera direkt oder über wenigstens ein Führungselement angeordnet, wobei die Anordnung des Deckelelementes an der Kamera als starre Anordnung ausgebildet ist, so dass das Deckelelement mit der Bewegung der Kamera zwischen einer Schließstellung und einer Öffnungsstellung mitbewegt werden kann.

Nach einer besonders vorteilhaften Anordnung der Führungskulisse kann diese im Gehäuse der Kameraeinheit vorgesehen sein. Das Gehäuse kann vorzugsweise zwei sich planparallel und beabstandet gegenüberliegende Gehäusewandungen aufweisen, so dass jeweils eine erste Führungskulisse in einer ersten Gehäusewand und eine zweite Führungskulisse in einer zweiten Gehäusewand eingebracht sein kann. Folglich sind die Führungskulissen entsprechend gegenüberliegend angeordnet, und in jeder der beiden Führungskulissen kann ein separates Gleitelement geführt sein, wobei die Gleitelemente eine Zylinderform aufweisen können, und die Rotationsachsen der Zylinderformen der Gleitelemente können ineinander liegen.

Das Gehäuse der Kameraeinheit kann zweiteilig ausgeführt sein, wobei ein erstes Gehäuseteil eine Montageplatte bildet, und das zweite Gehäuseteil besitzt eine Haubenform, so dass die Kamera zwischen der Montageplatte und der Haube integrierbar ist. Sowohl in der Montageplatte als auch im Bodenbereich der Haube befindet sich die jeweilige Führungskulisse, so dass eine gute Montierbarkeit der Kameraeinheit erreicht wird.

Um die Bewegung der Kamera zwischen der Rückzugsstellung und der Bilderfassungsstellung zu ermöglichen, ist eine Antriebseinheit vorgesehen. Die Wirkverbindung zwischen der Antriebseinheit und der Kamera kann ein Hebelelement umfassen, das innerhalb des Gehäuses durch eine Drehachse drehbar aufgenommen ist. Damit kann das Hebelelement um die Drehachse eine Schwenkbewegung ausführen, wobei die erste und die zweite Endlage der Schwenkbewegung der Rückzugsstellung bzw. der Bilderfassungsstellung der Kamera entsprechen. Das Hebelelement ist vorzugsweise innerhalb des Gehäuses angeordnet, das Hebelelement kann jedoch, abhängig von der geometrischen Ausführung des Gehäuses, auch außerhalb des Gehäuses vorhanden sein. Beispielsweise kann das Gehäuse als ein offenes Gehäuse ausgeführt sein, wie dieses beispielsweise durch eine Rahmenkonstruktion oder durch eine Halbschale mit beispielsweise halbseitiger Öffnung gegeben ist. Die Antriebseinheit kann als elektromagnetischer Aktuator mit einem Hubelement ausgeführt sein, das mit dem Hebelelement verbunden wird. Ferner kann die Antriebseinheit als ein Drehmotor und/oder als ein Zentralverriegelungssteller ausgeführt sein, wobei die als Zentralverriegelungssteller ausgeführte Antriebseinheit vorzugsweise auch zur Betätigung einer Zentralverriegelung des Kraftfahrzeugs dienen kann. Ist die Antriebseinheit als Drehmotor ausgeführt, kann ein Antriebsritzel vorgesehen sein, das durch den Drehmotor angetrieben wird. Ferner kann ein Anlenkelement vorhanden sein, das außerhalb am Gehäuse angeordnet ist und in der Drehachse drehübertragend mit dem Hebelelement verbunden wird, z. B. durch eine Passfeder, eine Vielzahnverbindung oder dergleichen. Dadurch wird erreicht, dass bei einem Anlenken des Anlenkelementes durch die Antriebseinheit eine Drehung des Hebelelementes um die Drehachse erzeugbar ist.

Es ist von Vorteil, wenn das Hebelelement als Zahnsegment ausgeführt wird, so dass das Ritzel mit dem Zahnsegment kämmend in Eingriff gebracht werden kann. Wird das Antriebsritzel in Rotation versetzt, kann das Zahnsegment eine Schwenkbewegung um die Drehachse ausführen, die zu einer Schwenkbewegung des Hebelelementes ebenfalls um die Drehachse führt. Unabhängig von der Bauart der Antriebseinheit kann diese eine Selbsthemmung aufweisen, wobei die Selbsthemmung vorzugsweise bei einer elektromotorisch ausgeführten Antriebseinheit ermöglicht ist. Folglich kann eine Bewegung des Hebelelementes und damit eine Bewegung der Kamera zwischen der Rückzugsstellung und der Bilderfassungsstellung ausschließlich durch einen elektrischen Betrieb der Antriebseinheit hervorgerufen werden. Insbesondere kann die Kamera nicht durch äußere Einwirkung aus der Rückzugsstellung in die Bilderfassungsstellung überführt werden.

Vorzugsweise ist die Kamera mit dem Hebelelement in einer Verbindungsachse gelenkig verbunden, so dass die Lage der Kamera im Gehäuse über der gesamten Bewegung der Kamera erstens durch die Führung des Gleitelementes in der Führungskulisse und zweitens durch die Lage der Verbindungsachse bestimmt ist. Sowohl die Verbindungsachse als auch die Gleitelemente bilden dabei Achsen, die vorzugsweise orthogonal auf der Erstreckungsebene der Führungskulisse liegen. Daraus ergibt sich eine beidseitige Führung der Kamera sowie des Deckelelementes im Gehäuse und insbesondere zwischen den beiden Gehäusewandungen. Damit ist eine besonders stabile 4-Punkt-Führung geschaffen, die zur Lagebestimmung der Kamera und des Deckelelementes über der Bewegung zwischen der Rückzugsstellung und der Bilderfassungsstellung dient.

Nach einer weiteren Verbesserung der erfindungsgemäßen Kameraeinheit kann die Führungskulisse einen S-förmigen Verlauf mit wenigstens einem Scheitelpunkt aufweisen. Der S-förmige Verlauf der Führungskulisse kann derart ausgebildet und der Scheitelpunkt kann derart angeordnet sein, dass der zum Erreichen der Bilderfassungsstellung erforderliche Bewegungsraum der Kamera und vorzugsweise des Deckelelementes minimal ist und/oder die Bilderfassungsstellung der Kamera und insbesondere das Deckelelement in der Bilderfassungsstellung lediglich einen minimalen Bauraum erfordern.
Die Kamera kann in der Bilderfassungsstellung aus einer Öffnung im Gehäuse wenigstens teilweise herausgefahren sein, wobei das Deckelelement in seiner Schließstellung gegen die Öffnung dichtend zur Anlage bringbar ist. Um eine verbesserte Dichtwirkung zu erzielen, kann zwischen der Öffnung und dem Deckelelement ein Dichtelement angeordnet werden. Insbesondere wird eine Verunreinigung der Kamera vermieden, die bei fehlender Abdichtung im Außenbereich eines Kraftfahrzeugs die Kamera sogar außer Funktion setzen kann. Insbesondere kann die Kamera eine Rückzugsstellung einnehmen, in der sich eine Anpresskraft des Deckelelementes in die Öffnung ergibt, um die Dichtwirkung des Dichtelementes weiter zu verbessern. Das Dichtelement kann dabei sowohl in der Öffnung eingebracht sein als auch an der zur Öffnung komplementären Dichtkante des Deckelelementes angeordnet werden.

Erfindungsgemäss ist der S-förmige Verlauf der Führungskulisse derart ausgebildet und insbesondere der Scheitelpunkt derart angeordnet werden, dass die Bewegung der Kamera und des an dieser angeordneten Bewegungselementes von der Rückzugsstellung in die Bilderfassungsstellung von einer Schwenkbewegung in eine im Wesentlichen lineare Bewegung übergeht. Gemäss der Erfindung entspricht die Führungskulisse in einem ersten Abschnitt einer Kreisbahn um die Drehachse herum so dass auch die Kamera und das Deckelelement zunächst eine reine Schwenkbewegung um die Drehachse ausführen. An diesem Bereich der Führungskulisse schliesst sich ein linearer oder sich in eine Umkehrrichtung erstreckender, bogenförmiger Bereich an In diesem Abschnitt kann die Kamera die Kreisbahn verlassen und eine gerade Bewegung oder eine umgekehrte Schwenkbewegung aus der Öffnung des Gehäuses heraus ausführen. Damit ergibt sich ein optimierter Bewegungsraum der Kamera und insbesondere des Deckelelementes, der durch Umbauteile in der Heckklappe eines Kraftfahrzeugs begrenzt sein kann. Die gewünschte Bewegungsbahn der Kamera von der Rückzugstellung in die Bilderfassungsstellung und umgekehrt kann auf einfache Art und Weise durch die Führungskulisse vorgegeben werden.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht eines Ausführungsbeispiels der Vorrichtung mit einer Kameraeinheit, wobei sich die Kamera in der Rückzugsstellung und das Deckelelement in der Schließstellung befindet,
- Figur 2: eine perspektivische Ansicht des Ausführungsbeispiels der Kameraeinheit gemäß Figur 1, wobei sich die Kamera in der Bilderfassungsstellung und das Deckelelement in der Öffnungsstellung befindet,
- Figur 3: eine Ansicht der Kameraeinheit gemäß Figuren 1 oder 2, jedoch in einer rückseitigen Ansicht,
- Figur 4: eine perspektivische Ansicht des Ausführungsbeispiels der Kameraeinheit ohne Gehäuse, wobei die Kamera in der Rückzugsstellung gezeigt ist und
- Figur 5: eine perspektivische Ansicht der Kameraeinheit gemäß Figur 4, wobei sich die Kamera in der Bilderfassungsstellung befindet.

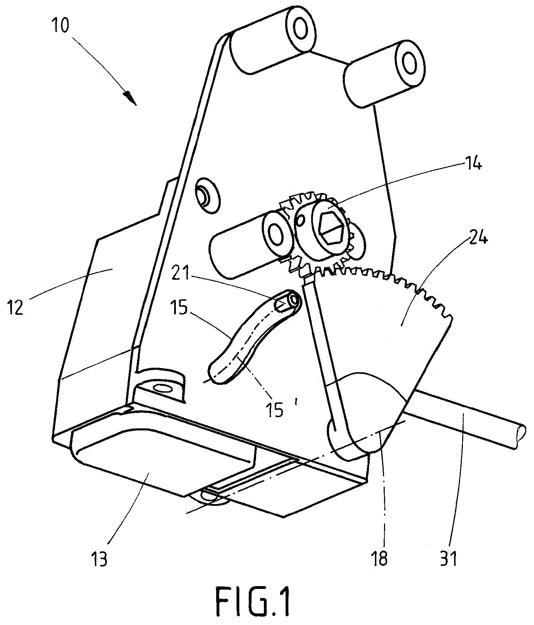

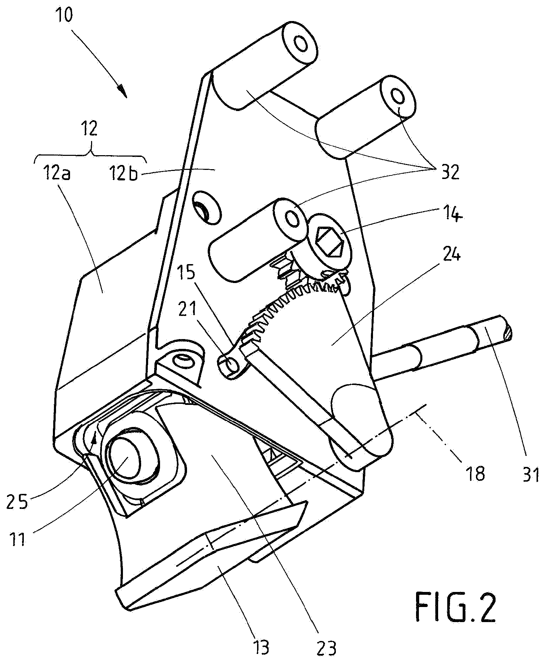

Die Figuren 1 und 2 zeigen ein Ausführungsbeispiel der erfindungsgemäßen Vorrichtung mit einer Kameraeinheit 10, die zur Bilderfassung des Außenbereiches eines Kraftfahrzeugs dient. Die Kameraeinheit 10 ist Bestandteil der erfindungsgemäßen Vorrichtung, wobei als weiterer Bestandteil ein Betätigungselement einer Heckklappe eines Kraftfahrzeugs vorhanden sein kann, die gemeinsam mit der Kameraeinheit 10 als modulare Einheit in die Heckklappe eines Kraftfahrzeugs integrierbar ist. Die Bilderfassung kann als Einparkhilfe dienen, wenn der Bereich hinter dem Kraftfahrzeug durch die Kameraeinheit 10 erfasst wird, um das erfasste Bild vorzugsweise über ein Display im Sichtbereich des Fahrers des Kraftfahrzeugs abzubilden.

In Figur 1 ist die Kameraeinheit 10 in einer Stellung gezeigt, die der Rückzugsstellung der Kamera 11 entspricht. Figur 2 zeigt die Kameraeinheit 10 in einer Bilderfassungsstellung, so dass lediglich in Figur 2 die Kamera 11 sichtbar dargestellt ist. Diese kann den Heckbereich des Kraftfahrzeugs aufnehmen und über ein Kabel 31 mit der Kamera 11 zugeordneten elektronischen Komponenten im Kraftfahrzeug verbunden werden. In Figur 1 ist die Kamera 11 durch das Gehäuse 12 und das Deckelelement 13 verdeckt, wobei in Figur 2 die Kamera 11 aus der Öffnung 25 im Gehäuse 12 herausgeführt ist, so dass diese Stellung der Kamera 11 die Bilderfassungsstellung wiedergibt. Das Deckelelement 13 schützt gemäß der Darstellung in Figur 1 die Kamera 11 vor Verunreinigungen, da die Öffnung 25 im Gehäuse 12 der Kameraeinheit 10 durch das Deckelelement 13 verschlossen ist.

Das Deckelelement 13 ist über ein Führungselement 23 indirekt aber starr mit der Kamera 11 verbunden. Folglich ergibt sich keine Relativbewegung des Deckelelementes 13 zur Kamera 11. Die Bewegungsführung des Deckelelementes 13 von der Schließstellung in die Öffnungsstellung erfolgt damit ausschließlich durch die Bewegungsführung der Kamera 11 zwischen der Rückzugsstellung und der Bilderfassungsstellung. Um die Kamera 11 gemeinsam mit dem Deckelelement 13 zwischen den jeweiligen Stellungen zu führen, ist eine erste Führungskulisse 15 vorgesehen, die im vorderen Bereich des Gehäuses 12 eingebracht ist. In der Führungskulisse 15 ist ein Gleitelement 21 geführt. In Figur 1 befindet sich die Kamera 11 in der Rückzugsstellung, so dass das Gleitelement 21 im hinteren Endbereich der ersten Führungskulisse 15 erkennbar ist, wobei der hintere Endbereich einen Anschlag für die Kamera 11 bildet. In Figur 2 ist hingegen das Gleitelement 21 in der vorderen Endlage der ersten Führungskulisse 15 gezeigt, die ebenfalls einen Anschlag für die Kamera 11 bildet. Die Bewegung zwischen der Rückzugsstellung und der Bilderfassungsstellung der Kamera wird durch ein Verschwenken eines Anlenkelementes 24 hervorgerufen, das als Zahnsegment 24 ausgeführt ist und um die Drehachse 18 verschwenkt werden kann.

Die Verschwenkung des Zahnsegmentes 24 erfolgt bei diesem Ausführungsbeispiel durch ein Antriebsritzel 14, das kämmend mit dem Zahnsegment 24 in Eingriff steht und in Rotation versetzt werden kann. Das Antriebsritzel 14 kann auf einer Antriebswelle von einem Drehmotor aufgenommen sein, der durch entsprechende Rechts-Links-Drehung eine Bewegung der Kamera 11 und des Deckelelementes 13 zwischen der Rückzugsstellung und der Bilderfassungsstellung hervorruft. Das Gehäuse 12 weist ein erstes Gehäuseteil 12a und ein zweites Gehäuseteil 12b auf, wobei am zweiten Gehäuseteil 12b mehrere Befestigungselemente 32 angeordnet sind, über die das Gehäuse 12 an ein Aufnahmeelement montiert werden kann oder über die eine Antriebseinheit am Gehäuse 12 befestigt werden kann, die mit dem Antriebsritzel 14 zusammenwirkt. Das Gleitelement 21 kann in der Führungskulisse 15 zwischen den genannten Anschlägen hin- und hergleiten. Die resultierende Bewegungsbahn der Kamera 11 und des Deckelelementes 13 wird durch die geometrische Gestaltung der Führungskulisse 15 vorgegeben.

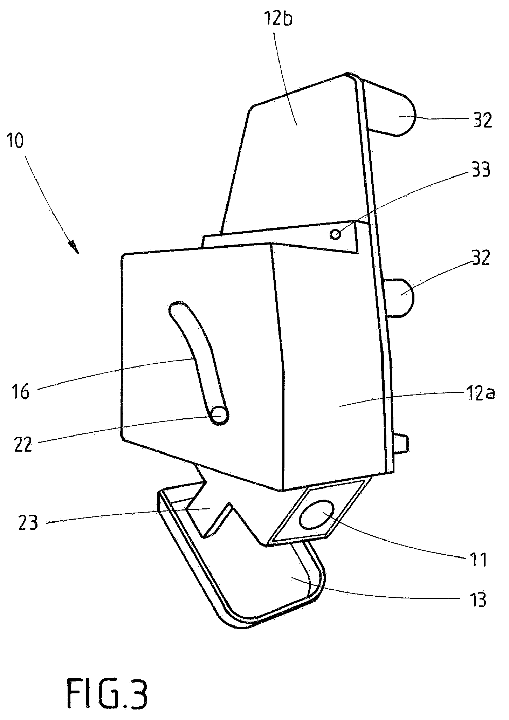

Figur 3 zeigt die Kameraeinheit 10 in einer rückseitigen Ansicht, so dass die Befestigungselemente 32 auf der Rückseite des zweiten Gehäuseteils 12b erkennbar sind. Auf der gezeigten Rückseite des ersten Gehäuseteils 12a befindet sich die zweite Führungskulisse 16, die parallel zur vorderseitigen ersten Führungskulisse 15 verläuft. Die Kamera 11 ist in der Bilderfassungsstellung gezeigt, wobei die Befestigung des Deckelelementes 13 an der Kamera 11 über Führungselemente 23 in Gestalt einer alternativen Ausführungsform gezeigt ist. In der Bilderfassungsstellung der Kamera 11 befindet sich das rückwärtige Gleitelement 22 in der vorderen Endlage innerhalb der zweiten Führungskulisse 16. Gemäß dem Ausführungsbeispiel sind die zwei Gehäuseteile 12a und 12b über Verschraubungen 33 miteinander verbunden.

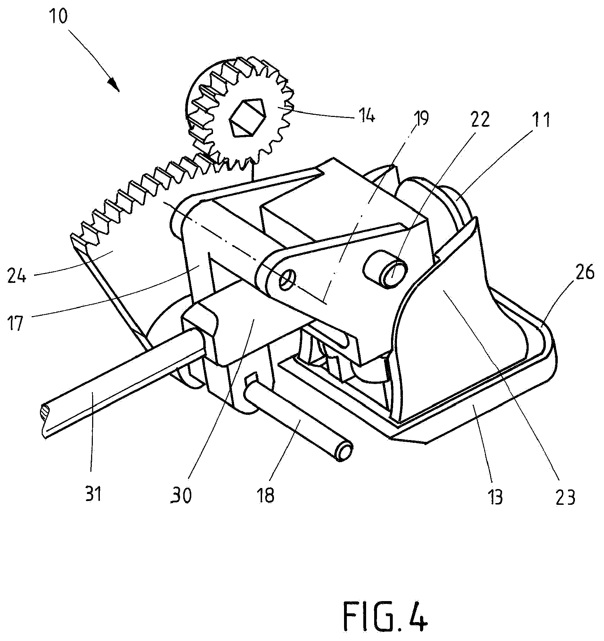

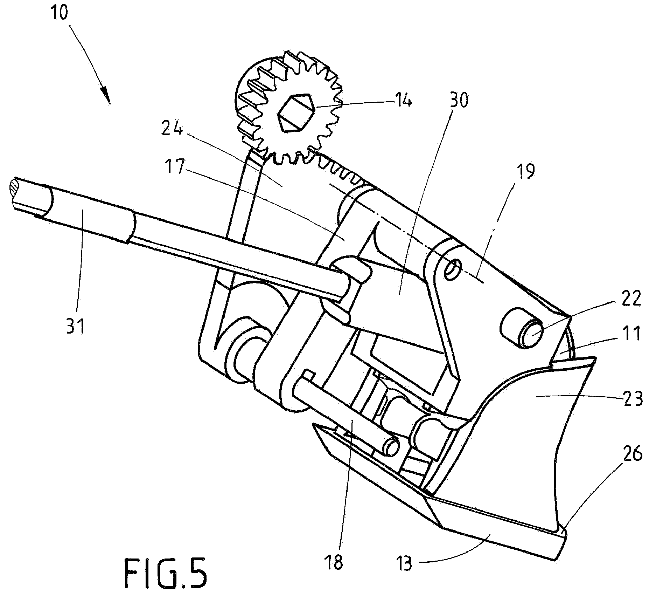

In den Figuren 4 und 5 ist die Kameraeinheit 10 ohne die Gehäuseteile 12a und 12b des Gehäuses 12 gezeigt. In Figur 4 ist die Kameraeinheit 10 in der Rückzugsstellung der Kamera 11 gezeigt, wohingegen Figur 5 die Kamera 11 in der Bilderfassungsstellung wiedergibt. Die Bewegung zwischen der Rückzugsstellung und der Bilderfassungsstellung der Kamera 11 wird durch eine Rotation des Antriebsritzels 14 hervorgerufen. Dadurch wird das Zahnsegment 24 um die Drehachse 18 verschwenkt, wobei das Zahnsegment 24 kämmend mit dem Antriebsritzel 14 in Eingriff steht.

Das Hebelelement 17 ist mittels eines Vorsprunges oder eines Nockens verdrehfest mit dem Zahnsegment 24 in der Drehachse 18 verbunden, derart, dass das Hebelelement 17 und das Zahnsegment 24 gemeinsam um die Drehachse 18 verdrehen können. Wird das Zahnsegment 24 durch das Antriebsritzel 14 um die Drehachse 18 verschwenkt, verschwenkt zugleich das Hebelelement 17. Die Kamera 11 ist mit dem Hebelelement 17 in der Verbindungsachse 19 gelenkig verbunden. Die Führung der Kamera 11 erfolgt durch Gleitelemente 21, 22, wobei vorliegend nur das vordere Gleitelement 22 erkennbar ist. Das Gleitelement 22 ist entlang der Führungskulisse 15 bzw. 16 geführt, die in den Figuren 1 bis 3 dargestellt sind. Rückseitig an die Kamera 11 schließt sich ein elektrisches Kontaktelement 30 zur Anbindung eines Kabels 31 an, um die Kamera 11 mit weiteren elektronischen Komponenten an Bord des Kraftfahrzeugs zu verbinden.

Gemäß der dargestellten Ausführungsform ist das Deckelelement 13 über Führungselemente 23 am Gehäuse der Kamera 11 angebracht. Folglich ist sowohl die Bewegung der Kamera 11 zwischen der Rückzugsstellung und der Bilderfassungsstellung als auch die Bewegung des Deckelelementes 13 zwischen der Schließstellung und der Öffnungsstellung gleichermaßen durch ein Anlenken des Zahnsegmentes 24 zwischen den in der Figur 4 und der Figur 5 gezeigten Positionen möglich. Die Drehachse 18 ist im Gehäuse 12 drehbar aufgenommen, wobei sowohl das Hebelelement 17 als auch das Zahnsegment 24 drehfest auf der Drehachse 18 aufgesetzt sind. Durch die Verbindungsachse 19 kann sich ebenfalls eine Achse erstrecken, um den gabelförmigen Teil der Kamera 11, die eine Art Gehäuse besitzt, gelenkig mit dem Hebelelement 17 zu verbinden. Die Bestimmung der Lage der Kamera 11 und des Deckelelementes 13 erfolgt über der gesamten Bewegung folglich erstens durch die Führung der Gleitelemente 21 und 22 in der Kulisse 15 und 16 und zweitens durch die Führung der Verbindungsachse 19 zwischen dem Hebelelement 17 und dem Gehäuse der Kamera 11.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen oder Verfahrensschritte, können sowohl für sich als auch in den verschiedensten Kombinationen erfindungswesentlich sein. Insbesondere geht die Erfindung von dem Gedanken aus, dass die Kamera 11 das Deckelelement 13 nicht ausstößt, da die Kamera 11 mit dem Deckelement 13 über das als Halteelement wirkende Führungselement 23 starr verbunden ist.

### Bezugszeichenliste

- 10: Kameraeinheit
- 11: Kamera
- 12: Gehäuse
- 12a: erster Gehäuseteil
- 12b: zweiter Gehäuseteil
- 13: Deckelelement
- 14: Antriebsritzel
- 15: erste Führungskulisse
- 15': Scheitelpunkt
- 16: zweite Führungskulisse
- 17: Hebelelement
- 18: Drehachse
- 19: Verbindungsachse
- 21: Gleitelement
- 22: Gleitelement
- 23: Führungselement
- 24: Anlenkelement, Zahnsegment
- 25: Öffnung
- 26: Dichtelement
- 30: elektrisches Kontaktelement
- 31: Kabel
- 32: Befestigungselement
- 33: Verschraubung

## Patentansprüche

1. Vorrichtung mit einer Kameraeinheit (10), die zur Bilderfassung des Außenbereiches eines Kraftfahrzeugs dient, mit einer Kamera (11), die in einem Gehäuse (12) der Kameraeinheit (10), umfassend eine Drehachse (18), zwischen einer Rückzugsstellung und einer Bilderfassungsstellung beweglich aufgenommen ist,
wobei wenigstens eine erste Führungskulisse (15) zur Führung der Bewegung der Kamera (11) zwischen der Rückzugsstellung und der Bilderfassungsstellung vorgesehen ist und wobei an der Kamera (11) wenigstens ein Gleitelement (21) angeordnet ist, das in der Führungskulisse (15) zur Führung der Bewegung der Kamera (11) zwischen der Rückzugsstellung und der Bilderfassungsstellung geführt ist,
und wobei ein Deckelelement (13) vorgesehen ist, das zum Verschließen einer im Gehäuse (12) vorhandenen Öffnung (25) dient, wenn sich die Kamera (11) in der Rückzugsstellung befindet, wobei das Deckelelement (13) an der Kamera (11) direkt oder über wenigstens ein Führungselement (23) angeordnet ist, wobei die Anordnung des Deckelelementes (13) an der Kamera (11) als starre Anordnung ausgebildet ist, sodass das Deckelelement (13) mit der Bewegung der Kamera (11) zwischen einer Schließstellung und einer Öffnungsstellung mitbewegbar ist,
**dadurch gekennzeichnet,**
**dass** die Führungskulisse (15) einen S-förmigen Verlauf mit wenigstens einem Scheitelpunkt (15') aufweist, wobei ein erster Abschnitt der Führungskulisse einer Kreisbahn um die Drehachse (18) herum entspricht, so dass die Kamera (11) und das Deckelelement (13) eine reine Schwenkbewegung um die Drehachse (18) ausführen und sich an den ersten Abschnitt ein linearer oder in Umkehrrichtung sich erstreckender, bogenförmiger Abschnitt anschließt, so dass die Kamera (11) und das Deckelelement (13) die Kreisbahn um die Drehachse verlassen und eine gerade Bewegung oder eine umgekehrte Schwenkbewegung aus der Öffnung (25) des Gehäuses (12) heraus ausführen.

2. Vorrichtung nach Anspruch 1
**dadurch gekennzeichnet,**
**dass** die wenigstens eine Führungskulisse (15) im Gehäuse (12) der Kameraeinheit (10) eingebracht ist, wobei das Gehäuse (12) vorzugsweise zwei sich planparallel beabstandet gegenüberliegende Gehäusewandungen (12) aufweist, und jeweils eine erste Führungskulisse (15) in einer ersten Gehäusewand und eine zweite Führungskulisse (16) in einer zweiten Gehäusewand vorhanden ist.

3. Vorrichtung nach einem der vorgenannten Ansprüche,
**dadurch gekennzeichnet,**
**dass** die Bewegung der Kamera (11) durch eine Antriebseinheit erzeugbar ist, wobei die Wirkverbindung zwischen der Antriebseinheit und der Kamera (11) ein Hebelelement (17) umfasst, das innerhalb des Gehäuses (12) an der Drehachse (18) drehbar aufgenommen ist.

4. Vorrichtung nach Anspruch 3,
**dadurch gekennzeichnet,**
**dass** die Kamera (11) mit dem Hebelelement (17) an einer Verbindungsachse (19) vorzugsweise gelenkig verbunden ist, sodass die Lage der Kamera (11) im Gehäuse (12) über der gesamten Bewegung der Kamera (11) erstens durch die Führung des Gleitelementes (21) in der Führungskulisse (15) und zweitens durch die Verbindungsachse (19) bestimmt ist.

5. Vorrichtung nach Anspruch 3 oder 4,
**dadurch gekennzeichnet,**
**dass** ein Anlenkelement (24) außenseitig am Gehäuse (12) angeordnet ist und an der Drehachse (18) drehübertragend mit dem Hebelelement (17) verbunden ist, derart, dass bei einem Anlenken des Anlenkelementes (24) durch die Antriebseinheit eine Drehung des Hebelelementes (17) um die Drehachse (18) erzeugbar ist.

6. Vorrichtung nach Anspruch 5,
**dadurch gekennzeichnet,**
**dass** ein Antriebsritzel (14) vorgesehen ist, das durch die Antriebseinheit in Rotation versetzbar ist, wobei das Anlenkelement (24) als Zahnsegment (24) ausgebildet ist, das kämmend mit dem Antriebsritzel (14) in Eingriff steht.

7. Vorrichtung nach einem der vorgenannten Ansprüche,
**dadurch gekennzeichnet,**
**dass** die Kamera (11) in der Bilderfassungsstellung aus der Öffnung (25) im Gehäuse (12) wenigstens teilweise herausfahrbar ist, und dass das Deckelelement (13) in der Öffnung (25) in der Schließstellung dichtend zu Anlage bringbar ist, wobei vorzugsweise zwischen der Öffnung (25) und dem Deckelelement (13) ein Dichtelement (26) angeordnet ist.

8. Vorrichtung nach einem der vorgenannten Ansprüche,
**dadurch gekennzeichnet,**
**dass** eine Antriebseinheit als elektromechanische Antriebseinheit mit einer Selbsthemmung ausgeführt ist, derart, dass eine Bewegung des Hebelelementes (17) ausschließlich durch einen Betrieb der Antriebseinheit ermöglich ist.

9. Vorrichtung nach einem der vorgenannten Ansprüche,
**dadurch gekennzeichnet,**
**dass** eine Antriebseinheit als ein Drehmotor und/oder als ein Zentralverriegelungssteller ausgeführt ist, wobei die als Zentralverriegelungssteller ausgeführte Antriebseinheit vorzugsweise auch zur Betätigung einer Zentralverriegelung des Kraftfahrzeugs ausgeführt ist.

10. Vorrichtung nach einem der vorgenannten Ansprüche,
**dadurch gekennzeichnet,**
**dass** der S-förmige Verlauf der Führungskulisse (15, 16) derart ausgebildet und insbesondere der Scheitelpunkt (15') derart angeordnet ist, dass der zum Erreichen der Bilderfassungsstellung erforderliche Bewegungsraum der Kamera (11) und des Deckelelementes (13) minimal ist und/oder die Bilderfassungsstellung der Kamera (11) und insbesondere das Deckelelement (13) in der Bilderfassungsstellung einen minimalen Raum erfordert.

## Claims

1. A device comprising a camera unit (10), which serves to capture images of the outer area of a motor vehicle, comprising a camera (11), which is accommodated in a housing (12) of the camera unit (10), comprising a rotation axis (18), so as to be movable between a retracted position and an image capturing position,
wherein at least one first slotted guide (15) is provided for guiding the motion of the camera (11) between the retracted position and the image capturing position, and wherein at least one sliding element (21), which is guided in the slotted guide (15) to guide the motion of the camera (11) between the retracted position and the image capturing position, is arranged on the camera (11),
and wherein a cover element (13) is provided, which serves for closing an opening (25) present in the housing (12), when the camera (11) is situated in the retracted position, wherein the cover element (13) is arranged on the camera (11) directly or via at least one guide element (23), wherein the arrangement of the cover element (13) on the camera (11) is designed as a rigid arrangement, so that the cover element (13) is able to be moved together with the movement of the camera (11) between a closed position and an open position,
**characterized in that**
the slotted guide (15) has an S-shaped course with at least one peak (15'), wherein a first section of the slotted guide corresponds to a circular path around the rotation axis (18), so that the camera (11) and the cover element (13) carry out a pure pivoting movement about the rotation axis (18) and adjoining onto the first section is a linear or arc-shaped section extending in the reverse direction, so that the camera (11) and the cover element (13) leave the circular path around the rotation axis and carry out a straight movement or a reversed pivoting movement out of the opening (25) of the housing (12).

2. The device according to claim 1,
**characterized in that**
the at least one slotted guide (15) is inserted in the housing (12) of the camera unit (10), wherein the housing (12) has preferably two housing walls (12) lying opposite one another spaced apart in a plane-parallel manner, and respectively a first slotted guide (15) is present in a first housing wall and a second slotted guide (16) is present in a second housing wall.

3. The device according to one of the preceding claims,
**characterized in that**
the movement of the camera (11) is able to be generated by a drive unit, wherein the operative connection between the drive unit and the camera (11) comprises a lever element (17), which is held rotatably on the rotation axis (18) within the housing (12).

4. The device according to claim 3,
**characterized in that**
the camera (11) is connected, preferably articulatedly, with the lever element (17) on a connection axis (19), so that the position of the camera (11) in the housing (12) is determined via the entire movement of the camera (11) firstly by the guide of the sliding element (21) in the slotted guide (15) and secondly by the connection axis (19).

5. The device according to claim 3 or 4,
**characterized in that**
a link element (24) is arranged externally on the housing (12) and is connected with the lever element (17) on the rotation axis (18) in a manner transferring the rotation, such that on a linking of the link element (24) by the drive unit a rotation of the lever element (17) about the rotation axis (18) is able to be generated.

6. The device according to claim 5,
**characterized in that**
a drive pinion (14) is provided, which is able to be set in rotation by the drive unit, wherein the link element (24) is constructed as a toothed segment (24), which is in engagement in a meshing manner with the drive pinion (14).

7. The device according to one of the preceding claims,
**characterized in that**
the camera (11) in the image capturing position is able to be moved at least partially out from the opening (25) in the housing (12), and that the cover element (13) in the opening (25) in the closed position is able to be brought into abutment in a sealing manner, wherein preferably a sealing element (26) is arranged between the opening (25) and the cover element (13).

8. The device according to one of the preceding claims,
**characterized in that**
a drive unit is embodied as an electromechanical drive unit with self-locking, such that a movement of the lever element (17) is enabled exclusively by an operation of the drive unit.

9. The device according to one of the preceding claims,
**characterized in that**
a drive unit is embodied as a rotation motor and/or as a central locking actuator, wherein the drive unit embodied as a central locking actuator is preferably also embodied for the actuation of a central locking of the motor vehicle.

10. The device according to one of the preceding claims,
**characterized in that**
the S-shaped course of the slotted guide (15, 16) is designed in such a way and in particular the peak (15') is arranged in such a way that the space of movement of the camera (11), necessary for reaching the image capturing position, and of the cover element (13) is minimal and/or the image capturing position of the camera (11) and in particular the cover element (13) requires a minimal space in the image capturing position.

## Revendications

1. Dispositif comprenant une unité de caméra (10) qui sert à capturer des images de l'extérieur d'un véhicule automobile, avec une caméra (11) qui est logée de façon mobile dans un boîtier (12) de l'unité de caméra (10), comprenant un axe de rotation (18), entre une position rétractée et une position de capture d'images,
au moins une première coulisse de guidage (15) étant prévue pour guider le déplacement de la caméra (11) entre la position rétractée et la position de capture d'images et au moins un élément coulissant (21) étant disposé sur la caméra (11), lequel est guidé dans la coulisse de guidage (15) pour guider le déplacement de la caméra (11) entre la position rétractée et la position de capture d'images,
et un élément couvercle (13) étant prévu, qui sert à fermer une ouverture (25) présente dans le boîtier (12) quand la caméra (11) se trouve dans la position rétractée, l'élément couvercle (13) étant disposé sur la caméra (11) directement ou par l'intermédiaire d'au moins un élément de guidage (23), l'agencement de l'élément couvercle (13) sur la caméra (11) étant conçu rigide, de sorte que le déplacement de la caméra (11) entraîne un déplacement associé de l'élément couvercle (13) entre une position de fermeture et une position d'ouverture,
**caractérisé en ce**
**que** la coulisse de guidage (15) présente un tracé en forme en S avec au moins un sommet (15'), une première partie de la coulisse de guidage correspondant à une trajectoire circulaire autour de l'axe de rotation (18), de sorte que la caméra (11) et l'élément couvercle (13) effectuent un mouvement pivotant pur autour de l'axe de rotation (18), et une partie linéaire ou en forme d'arc s'étendant dans une direction inverse, faisant suite à la première partie, de sorte que la caméra (11) et l'élément couvercle (13) quittent la trajectoire circulaire autour de l'axe de rotation et effectuent un mouvement rectiligne ou un mouvement pivotant inverse pour sortir de l'ouverture (25) du boîtier (12).

2. Dispositif selon la revendication 1,
**caractérisé en ce**
**que** ladite au moins une coulisse de guidage (15) est ménagée dans le boîtier (12) de l'unité de caméra (10), le boîtier (12) présentant de préférence deux parois de boîtier (12) planes et parallèles se faisant face à distance l'une de l'autre, et une première coulisse de guidage (15) étant présente dans une première paroi de boîtier et une deuxième coulisse de guidage (16) dans une deuxième paroi de boîtier.

3. Dispositif selon l'une des revendications précédentes,
**caractérisé en ce**
**que** le déplacement de la caméra (11) peut être produit par une unité d'entraînement, la liaison fonctionnelle entre l'unité d'entraînement et la caméra (11) comprenant un élément levier (17) qui est monté rotatif sur l'axe de rotation (18) à l'intérieur du boîtier (12).

4. Dispositif selon la revendication 3,
**caractérisé en ce**
**que** la caméra (11) est reliée à l'élément levier (17) de préférence de manière articulée sur un axe de liaison (19), de sorte que la position de la caméra (11) dans le boîtier (12) est déterminée, sur tout le déplacement de la caméra (11), premièrement par le guidage de l'élément coulissant (21) dans la coulisse de guidage (15) et deuxièmement par l'axe de liaison (19).

5. Dispositif selon l'une des revendications 3 ou 4,
**caractérisé en ce**
**qu'**un élément d'articulation (24) est disposé extérieurement sur le boîtier (12) et relié à l'élément levier (17) en transmission de rotation sur l'axe de rotation (18), de sorte que lors d'une articulation de l'élément d'articulation (24) par l'unité d'entraînement, une rotation de l'élément levier (17) autour de l'axe de rotation (18) peut être produite.

6. Dispositif selon la revendication 5,
**caractérisé en ce**
**qu'**un pignon d'entraînement (14) est prévu, qui peut être mis en rotation par l'unité d'entraînement, l'élément d'articulation (24) étant réalisé sous la forme d'un segment denté (24) qui est en prise par engrènement avec le pignon d'entraînement (14).

7. Dispositif selon l'une des revendications précédentes,
**caractérisé en ce**
**que** dans la position de capture d'images, la caméra (11) peut être sortie au moins partiellement de l'ouverture (25) dans le boîtier (12), et que dans la position de fermeture, l'élément couvercle (13) peut être appliqué de façon étanche dans l'ouverture (25), un élément d'étanchéité (26) étant de préférence disposé entre l'ouverture (25) et l'élément couvercle (13).

8. Dispositif selon l'une des revendications précédentes,
**caractérisé en ce**
**qu'**une unité d'entraînement est réalisée sous la forme d'une unité d'entraînement électromécanique avec un blocage automatique, de sorte qu'un déplacement de l'élément levier (17) est rendu possible uniquement par un fonctionnement de l'unité d'entraînement.

9. Dispositif selon l'une des revendications précédentes,
**caractérisé en ce**
**qu'**une unité d'entraînement est réalisée sous la forme d'un moteur rotatif et/ou d'un actionneur de verrouillage centralisé, l'unité d'entraînement réalisée sous la forme d'un actionneur de verrouillage centralisé étant de préférence réalisée aussi pour actionner un verrouillage centralisé du véhicule automobile.

10. Dispositif selon l'une des revendications précédentes,
**caractérisé en ce**
**que** la forme en S de la coulisse de guidage (15, 16) est conçue et en particulier le sommet (15') disposé de telle façon que l'espace de déplacement de la caméra (11) et de l'élément couvercle (13) qui est nécessaire pour atteindre la position de capture d'images soit minimal et/ou que la position de capture d'images de la caméra (11) et en particulier l'élément couvercle (13) dans la position de capture d'images exigent un espace minimal.
